# EUROPÄISCHE PATENTANMELDUNG

(11) **EP 0 764 701 A2**
(43) Veröffentlichungstag der Anmeldung: **26.03.1997**
(21) Anmeldenummer: 96114576.0
(22) Anmeldetag: 12.09.1996
(51) Int. Cl.: C09D 17/00, C08G 18/62

(54) **Pigmentpräparationen**

(30) Priorität: 25.09.1995 DE 19535502
(71) Anmelder: BAYER AG, 51368 Leverkusen (DE)
(72) Erfinder: Nyssen, Peter-Roger, Dipl.-Ing., 41542 Dormagen (DE); Kressner, Michael, Dipl.-Ing., 42799 Leichlingen (DE); Goergen, Michael, 50667 Köln (DE); Leitermann, Josef, 51373 Leverkusen (DE)

(57) **Zusammenfassung**

Pigmentpräparationen, enthaltend wenigstens
a) ein Pigment,
b) einen Monohydroxyether und
c) ein urethanisiertes Homo- oder Copolymerisat sind geeignet zum Pigmentieren von organischen makromolekularem Material, insbesondere Polyurethan-Schaumstoffen.

## Beschreibung

Die Erfindung betrifft Pigmentpräparationen, ein Verfahren zu ihrer Herstellung, ein Verfahren zum Pigmentieren von organischem makromolekularem Material, insbesondere Kunststoffen auf Polyurethanbasis sowie die Verwendung urethanisierter Homo- oder Copolymerisate enthaltender Pigmentpräparation zum Pigmentieren von Polyurethanschäumen.

Polyurethane als Lackbindemittel oder Beschichtungsmaterial, z.B. für Textilien, werden in einer breiten Palette als Ein- oder Zweikomponenten-Systeme, hochelastisch oder hart, lösungsmittelfrei oder lösungsmittelhaltig hergestellt. Sofern diese Materialien pigmentiert werden, stellt sich das Problem, einen geeigneten Pigmentträger zu finden, in dem die Pigmente hochkonzentriert flockungsfrei dispergiert werden können und der mit den verschiedenartigen Polyurethanen verträglich ist, um nicht für jedes spezielle System eine spezielle Pigmentpaste bereithalten zu müssen. Bei den in der Lackindustrie gebräuchlichen Zweikomponenten-Systemen steht für die Pigmentierung zumeist nur die relativ niedrigviskose Polyolkomponente zur Verfügung, in der nicht nur Ruß oder organische Pigmente wie Phthalocyanine, sondern auch anorganische Pigmente wie Eisenoxid-Gelb oder Eisenoxid-Rot nicht ohne Flockungs- und Thixotropieerscheinungen zu dispergieren sind. Das macht zunächst jede Anreibung problematisch und unwirtschaftlich, wirkt sich aber nach Zusatz der Isocyanat-Komponente zudem noch negativ auf Verlauf Glanz, Farbtiefe, Deckfähigkeit und Glanzhaltung der ausgehärteten Lackfilme aus.

In den Polyurethan-Beschichtungsmaterialien für Textilien liegen sehr hochmolekulare Körper vor, die untereinander nur begrenzt mischbar sind (Ein- oder Zweikomponenten-Systeme) und schon allein aus Viskositätsgründen keine hohen Pigmentkonzentrationen erlauben.

Neben diesen homogenen Polyurethanen haben zellförmige Polyurethane große Bedeutung erlangt, die hinsichtlich ihrer Elastizität von harten zu extrem weichen Schaumstoffen variieren können. Die Anfärbung dieser Schaumstoffe geschieht in der Hauptsache kurz vor der Verschäumung in einem Mischkopf, in dem Polyole und Polyisocyanate gegebenenfalls in Gegenwart von Hilfsstoffen mit Farbpasten innig vermischt werden. Als Bindemittel enthalten solche Farbpasten zumeist Polyester- oder Polyether-Polyole, deren Pigmentaufnahmevermögen insbesondere gegenüber Ruß jedoch so niedrig ist, daß bei Rußkonzentrationen von 10 bis 18 % bereits hochviskose Farbpasten vorliegen. Bei einer normalen Zudosierung einer Farbpaste von 3 bis 5 Gew.-%, bezogen auf die Summe aller in den Schaumstoff eingehenden Komponenten, die noch ohne großen Einfluß auf das mechanische Verhalten der Schaumstoffe ist, wird keine tiefe Anfärbung erreicht, sondern im Falle des Rußes nur eine graue Färbung.

Um hohe Farbtiefen des zu pigmentierenden Materials zu ermöglichen, die Dosierfähigkeit bei der Herstellung des Materials zu gewährleisten und den Einfluß auf das mechanische Verhalten dieser Materialien, insbesondere der Schaumstoffe, durch das Bindemittel klein zu halten, sind gut pumpbare Pasten mit hohen Pigmentgehalten gewünscht.

Eine gute Pump- und Fließfähigkeit der Farbpasten bei den gewünschten hohen Pigmentgehalten spielt auch bei der Herstellung der Farbpasten eine wichtige Rolle. Hochviskose und/oder nicht fließfähige Pasten können technisch nur auf Walzenstühlen oder in Knetern hergestellt werden.

Aufgabe der vorliegenden Erfindung ist daher auch, Pigmentpräparationen zur Verfügung zu stellen, die über den gesamten Herstellungsprozeß, insbesondere mit kontinuierlich betriebenen Rührwerkperlmühlen, eine möglichst niedrige Viskosität sowie gute Fließeigenschaften besitzen und somit besonders wirtschaftlich herzustellen sind.

In der Literatur wurden bereits mehrere Wege beschritten, diese Ziele zu realisieren. Aus DE-A 3 115 651 ist bekannt, dem Polyetherpolyolbindemittel als viskositätssenkendes Additiv ein Polyvinylpyrrolidon zuzusetzen. In DE-A 3 803 810 wird als Additiv zum Bindemittel ein Copolymerisat aus α-Olefin und α-β-ungesättigten Dicarbonsäureestern zugegeben. Weiterhin sind als Additive zu Polyesterpolyol- bzw. Polyetherpolyol-haltigen Bindemitteln titanorganische Verbindungen (DE-A 4 236 709) sowie ölmodifizierte Polyurethane (EP-A 603 546) bekannt. In DE-A 2 402 839 wird dagegen als Pigmentträger ein Carbodiimidgruppen-haltiges Harz verwendet.

Die aus dem Stande der Technik bekannten Pigmentpräparationen besitzen jedoch noch einige Nachteile. So sind manche Zusätze bzw. Bindemittelsysteme meist nur bei bestimmten Pigmenten wirksam. Weiterhin kommt es bei den bekannten Präparationen leicht zu Agglomerationen des Pigments, so daß die gewünschte Farbstärke in dem zu färbenden Material nicht erreicht werden kann. Bei einigen dieser Präparationen kommt es beispielsweise während des Schäumungsprozesses von Polyurethan zu unerwünschten Agglomerationen bzw. Aggregatbildung in Folge des Verdünnungseffektes der Paste, wodurch ebenfalls die gewünschte Farbtiefe nicht erreicht wird.

Es wurde nun gefunden, daß die aufgezeigten Nachteile mit den erfindungsgemäßen Pigmentpasten überwunden werden können, enthaltend wenigstens
a) ein Pigment,
b) einen Monohydroxyether und
c) ein urethanisiertes Homo- oder Copolymerisat.

In einer bevorzugten Ausführungsform enthalten die erfindungsgemäßen Pigmentpräparationen
a) 5 bis 80 Gew.-%, insbesondere 10 bis 60 Gew.-% Pigment,
b) 5 bis 90 Gew.-%, insbesondere 5 bis 80 Gew.-% eines Monohydroxyethers und
c) 0,5 bis 20 Gew.-%, 1 bis 10 Gew.-%, insbesondere 1-5 Gew.-% urethanisiertes Homo- oder Copolymerisat,
wobei sich die Prozentangaben jeweils auf die Summe der Komponenten a) bis c) beziehen.

Die Pigmente der erfindungsgemäßen Pigmentpräparationen unterliegen keiner Beschränkung. Sie können organischer oder anorganischer Natur sein. Geeignete organische Pigmente sind z.B. solche der Azo-, Ahthrachinon-, Thioindigo-Reihe, ferner andere polycyclische Pigmente, z.B. aus der Phthalocyanin-, Chinacridon-, Dioxazin-, Naphthalintetracarbonsäure-, Perylentetracarbonsäure- oder Isoindolin-Reihe sowie Metallkomplex-Pigmente oder verlackte Farbstoffe wie Ca-, Mg-, Al-Lacke von sulfonsäure- und/oder carbonsäuregruppenhaltigen Farbstoffen sowie Ruß, von denen eine große Zahl beispielsweise aus Color Index, 2. Auflage, bekannt ist. Geeignete anorganische Pigmente sind beispielsweise Zinksulfide, Ultramarin, Titandioxide, Eisenoxide, Nickel- oder Chromantimontitandioxid, Cobaltblau, Chromoxide und Chromatpigmente. Vorzugsweise wird Ruß eingesetzt, der im Rahmen dieser Anmeldung auch als Pigment betrachtet wird.

Besonders bevorzugte Pigmente der erfindungsgemäßen Pigmentpräparationen sind beispielsweise Phthalocyaninpigmente, wie Pigment Blue 15, Pigment Green 7, Arylamid-Pigmente wie Pigment Yellow 83, Pigment Yellow 17, Monoazo-Pigmente wie Pigment Red 48, Litholpigmente, Disazokondensationspigmente, wie Pigment Red 166, sowie Ruße, Zinksulfide und Ultramarine. Ganz besonders bevorzugt sind Ruße mit einer BET-Oberfläche von 30 bis 230 m²/g.

Als Monohydroxyether werden vorzugsweise Monohydroxyalkylether verstanden, insbesondere solche, die sich von Homo-, Co- oder Block-Co-Polyetherpolyolen, welche durch Umsetzung von Ethylenoxid und/oder Propylenoxid mit Wasser oder mit niedermolekularen, polyfunktionellen Alkoholen, die mindestens zwei Hydroxygruppen besitzen, erhalten wurden, ableiten oder die sich von niedermolekularen polyfunktionellen Alkoholen mit wenigstens zwei, vorzugsweise zwei oder mehreren Hydroxygruppen ableiten. Unter polyfunktionellen Alkoholen werden insbesondere aliphatische C₂-C₆-Alkohole wie beispielsweise Ethylenglykol, 1,2- oder 1,3-Propandiol, 1,2- oder 1,4-Butandiol, 1,6-Hexandiol, Glycerin, Trimethylolpropan oder Pentaerythrit verstanden. Besonders bevorzugt sind Monohydroxyether, insbesondere Monohydroxypolyether. Als Monoalkylether, insbesondere Mono-C₁-C₄-Alkylether sind bevorzugt solche zu nennen, die sich von Diethylenglykol oder auf Ethylenglykol oder 1,2- oder 1,3-Propandiol gestartete Alkylenoxidaddukte aus Ethylenoxid und/oder Propylenoxid mit einem als Zahlenmittel bestimmten mittleren Molekulargewicht von 62 bis 5000 g/mol ableiten. Bevorzugte Monoalkylhydroxyether sind auf Mono-C₁-C₄-alkoholen gestarteten Ethylenoxid und/oder Propylenoxid-Polyether, insbesondere die auf Methanol, Ethanol, Isopropanol, n-Propanol, n-, sec-, tert.-Butanol gestarteten Monohydroxyether. Besonders bevorzugt sind Mono-C₁-C₄-alkylglykolether, insbesondere Monomethyl-, Monoethyl-, Monoisopropyl-, Mono-n-propyl-, Mono-n-butyl-, Mono-sek.-butyl- oder Mono-tert.-butylglykolether ist, ganz besonders bevorzugt Mono(n-butyl)ethylenglykolether oder Mono(n-butyl)diethylenglykolether als Komponente b).

Unter urethanisierten Homo- oder Copolymerisaten sind solche vinylhaltiger Monomerer bevorzugt. Insbesondere werden Umsetzungsprodukte aus hydroxylgruppenhaltigen Homo- und Copolymerisaten mit isocyanatgruppenhaltigen Verbindungen verstanden. Dabei ist vorzugsweise mindestens eines der Comonomere hydroxylgruppenhaltig und die durch das hydroxylgruppenhaltige Comonomer ins Homo- bzw. Copolymerisat eingebrachten Hydroxylgruppen sind ganz oder teilweise urethanisiert. Besonders bevorzugt sind urethanisierte Homo- oder Copolymerisate, die ein Umsetzungsprodukt eines hydroxylgruppenhaltigen Co- oder Homopolymeren, nachfolgend als Komponente A) bezeichnet, mit einer NCO-gruppenhaltigen Verbindung, nachfolgend als Komponente B) bezeichnet, sind, wobei auf 1 Mol urethanisierbarer OH-Gruppen der Komponente A) vorzugsweise mehr als 0,1 Mol Äquivalente der NCO-gruppenhaltigen Verbindung B), vorzugsweise 1 bis 4 Mol Äquivalente, insbesondere mehr als 1 Mol-Äquivalent, der Komponente B) eingesetzt wird. Das bevorzugte als Zahlenmittel bestimmte mittlere Molekulargewicht der Komponente A) beträgt 1000 bis 200000 g/mol, die OH-Zahl vorzugsweise 2 bis 300 mg KOH/g A), die Säurezahl vorzugsweise 0 bis 140 mg KOH/g A). Vorzugsweise enthält das Umsetzungsprodukt der Komponente A) mit der Komponente B) NCO-Gruppen, insbesondere 0,2 bis 6 Gew.-%, besonders bevorzugt 0,5 bis 4 Gew.-%. Ebenfalls vorteilhaft sind jedoch auch NCO-Gruppen-freie Umsetzungsprodukte der Komponenten A und B.

Als mögliche Comonomeren kommen beispielsweise C₁-C₄-Alkylvinylester wie Vinylacetat oder Vinylpropionat, Styrol, gegebenenfalls durch C₁-C₄-Alkyl- und/oder Hydroxy- substituiertes Styrol, wie α-Methylstyrol oder 2- oder 4-Hydroxystyrol, 2- oder 4-Hydroxymethyl-Styrol, C₁-C₄-Alkyl-vinylether wie Methylvinylether, Ethylvinylether oder n-Butylvinylether oder Acrylate oder (Meth)Acrylate der Formel (I) 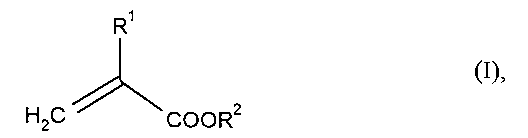 worin
- R¹: H oder CH₃ und
- R²: H oder einen gegebenenfalls substituierten C₁-C₁₂-aliphatischen-, insbesondere C₁-C₁₂-Alkyl oder C₁-C₁₂-Alkenyl, C₅-C₁₂-cycloaliphatischen, C₆-C₁₀-aromatischen- oder C₆-C₁₀-Aryl-C₁-C₄-alkyl-Rest bedeutet.

Als mögliche Substituenten der unter R² aufgeführten Reste sind insbesondere Hydroxyl-Gruppen, C₁-C₄-Alkyl, C₁-C₄-Alkoxy sowie gegebenenfalls durch O-Atome unterbrochene Alkylreste zu nennen.

Besonders bevorzugte Reste R² sind solche aus der Gruppe: Methyl, Ethyl, n-Propyl, Isopropyl, n-Butyl, n-Hexyl, n-Octyl, Isooctyl, Cyclooctyl, Octenyl, Hexenyl, Butenyl, Propenyl, Propyl, -CH₂-CH₂-OH, -(CH₂)₃-OH, 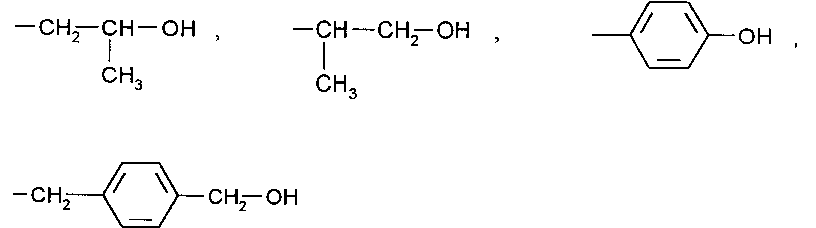 und -(CH₂CH₂O)ₙ-R,
worin R = C₁-C₄-Alkyl oder H und n = 1 bis 100.

Besonders bevorzugt sind Copolymere A) aus den Comonomeren Isooctylacrylat oder -(meth)acrylat, (Meth)acrylsäure, Diethylenglykolmonoacrylat, Diethylenglykolmono(meth)acrylat und/oder Methyl-(meth)acrylat.

Die Homo- oder Copolymere A) enthalten mindestens ein hydroxygruppenhaltiges Comonomer. Homo- oder Copolymere A) werden vorzugsweise erhalten durch Polymerisation einer Comonomerenmischung aus:
10 bis 60 Mol-% Isooctylacrylat und/oder -methacrylat,
1 bis 30 Mol-%, insbesondere 5 bis 15 Mol-% Diethylenglykolmonoacrylat und/oder -methacrylat,
10 bis 89 Mol-% Methylacrylat und/oder Methylmethacrylat
0 bis 20 Mol-% (Meth)acrylsäure, wobei sich die Summe der Comonomeren zu 100 Mol-% ergibt.

Die Homo- oder Copolymerisate der Komponente A) werden mit Isocyanatgruppen-haltigen Verbindungen der Komponente B), die vorzugsweise aus der nachstehenden Gruppe stammen, urethanisiert. Beispielhaft können als Komponente B) genannt werden: Hexamethylendiisocyanat, Isophorondiisocyanat, Toluylendiisocyanat, Diphenylmethandiisocyanat oder sein Dimeres oder Oligomere von Hexamethylendiisocyanat mit Biuret-, Isocyanurat- oder Uretdionstrukturen oder Monoisocyanatverbindungen wie beispielsweise Butylisocyanat, Phenylisocyanat, Hexylisocyanat und Stearylisocyanat.

Eine weiterhin bevorzugte einzusetzende Komponente B) weist vorzugsweise eine (mittlere) NCO-Funktionalität von 2,0 bis 4,4, vorzugsweise 2,0 bis 4,2 auf. Sie besteht aus bspw. einem organischen Polyisocyanat mit (cyclo)aliphatisch oder aromatisch gebundenen Isocyanatgruppen. Es handelt sich bei den Polyisocyanaten bzw. Polyisocyanatgemischen der Komponente B) beispielsweise um beliebige, durch Modifizierung einfacher (cyclo)aliphatischer Diisocyanate hergestellte Polyisocyanate mit Uretdion und/oder Isocyanurat-, Urethan- und/oder Allophanat-, Biuret- oder Oxadiazinstruktur, wie sie beispielsweise in den DE-A 16 70 666, DE-A-37 00 209, DE-A-39 00 053, EP-A 3 36 205 oder EP-A 339 396 beispielhaft beschrieben sind.

Geeignete Diisocyanate zur Herstellung solcher Polyisocyanate sind grundsätzlich solche des Molekulargewichtsbereichs 140 bis 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4'-Diisocyanatodicyclohexylmethan oder beliebige Gemische solcher Diisocyanate. Bevorzugt handelt es sich bei den Komponenten B) um im wesentlichen aus trimeren 1,6-Diisocyanatohexan und gegebenenfalls dimerem 1,6-Diisocyanatohexan bestehende Isocyanuratgruppen und gegebenenfalls Uretdiongruppen aufweisende Polyisocyanatgemisch mit einem NCO-Gehalt von 19 bis 24 Gew.-%. Besonders bevorzugt werden als Komponente B) die entsprechenden, weitgehend Uretdiongruppen-freien, Isocyanuratgruppen aufweisenden Polyisocyanate des genannten NCO-Gehalts eingesetzt, wie sie durch an sich bekannte, katalytische Trimerisierung und unter Isocyanuratbildung von 1,6-Diisocyanatohexan erhalten werden und die vorzugsweise eine (mittlere) NCO-Funktionalität von 3,2 bis 4,2 aufweisen.

Besonders bevorzugt ist Hexamethylendiisocyanat.

Die Herstellung der Homo- oder Copolymerisate A) i.A. und in der bevorzugten Zusammensetzung ist dem Fachmann bekannt und kann in einem geeigneten Lösungsmittel erfolgen, z.B. seien genannt:
- aliphatische oder aromatische Kohlenwasserstoffe wie z.B. Xylol, Toluol,
- aliphatische oder aromatische Ester wie z.B. Essigsäureethylester, Propylenglykoldiacetat, Methoxypropylacetat,
- Ketone, wie z.B. Aceton, Methylethylketon, Methylisobutylketon,
- Alkohole, wie z.B. Butanol,
- niedermolekulare Polyglykole, wie z.B. Diethylengkykol, Dipropylenglykol, Ethylenglykolmonomethylether, Ethylenglykolmonobutylether, Diethylenglykolmonobutylether.

Die Herstellung der Umsetzungsprodukte aus den Homo- oder Copolymerisaten A) mit isocyanatgruppenhaltigen Verbindungen B) erfolgt vorzugsweise in einem OH-gruppenfreien Lösungsmittel, z.B. in aliphatischen oder aromatischen Ester bspw. Glykolester.

Die erfindungsgemäßen Pigmentpräparationen weisen vorzugsweise keine freien NCO-Gruppen auf.

Beispielsweise kann als urethanisiertes Copolymerisat SER-AD®FX 9085 der Fa. Servo Delden BV, Holland genannt werden.

Bevorzugt sind erfindungsgemäße Präparationen, wobei die drei Komponenten a), b) und c) zusammen vorzugsweise mehr als 80 Gew.-%, insbesondere mehr als 90 Gew.-% der Pigmentpräparationen darstellen.

Zusätzlich zu den drei Komponenten a), b) und c) können die erfindungsgemäßen Pigmentpräparationen weitere Zusätze enthalten, wie beispielsweise als Komponente d) Polyetherpolyole und/oder Polyesterpolyole wie sie z.B. als Anpastungsmittel bzw. Bindemittel in Pigmentpasten oder als Aufbaukomponenten für Polyurethane bekannt sind. Insbesondere sind als Komponente d) Polyester aus Phthalsäure oder Adipinsäure und einem Diol und/oder einem einwertigen Alkohol mit 1 bis 18 C-Atomen, wie sie z.B. aus DE-A 2 905 975 bekannt sind, z.B. Polyethylenglykol und Polypropylenglykol, sowie insbesondere unter Normalbedingungen flüssige, Polyetherpolyole, hergestellt durch Anlagerung von Ethylenoxid und/oder Propylenoxid an ein Polyol (siehe z.B. DE-A 3 115 651).

Auch nicht-polyhydroxyfunktionelle Dicarbonsäurester wie C₁-C₄-Alkylester der Adipinsäure oder der Phthalsäure kommen als weitere Zusätze in Frage. Der Anteil der Komponente d) kann bis zu 80 Gew.-%, vorzugsweise bis zu 50 Gew.-%, bezogen auf die Präparation betragen. In diesen Pigmentpräparationen beträgt die Summe der Komponenten a), b), c) und d) vorzugsweise mehr als 80 Gew.-%, insbesondere mehr als 90 Gew.-%, bezogen auf die Pigmentpräparation.

Weiterhin können die erfindungsgemäßen Pigmentpräparationen weitere, für Pigmentpräparation übliche Bestandteile enthalten. Als solche seien beispielhaft genannt: Verdünnungsmittel wie Di-/Tributylphosphat, Glykolether, Glycerinether, Stabilisatoren und/oder Konservierungsmittel oder Methoxypropylacetat.

Die Erfindung betrifft weiterhin ein Verfahren zur Herstellung der erfindungsgemäßen Pigmentpräparationen, das dadurch gekennzeichnet ist, daß man beispielsweise die Komponente c), welche vorzugsweise in einer 10 bis 80 Gew.-% Lösung in einem bevorzugt genannten OH-gruppenfreien Lösungsmittel vorliegt, homogen in die Komponente b), gegebenenfalls in die Komponente d), oder gegebenenfalls in ein Gemisch aus den Komponenten b) und d) einrührt und unmittelbar danach die Komponente a) beispielsweise mittels eines schnelllaufenden Rührers oder Dissolvers homogen einmischt.

In einer bevorzugten Verfahrensweise werden die Mengenverhältnisse der Komponente b) oder der Summe aus den Komponenten b) und d), sofern die Komponente d) verwendet wird, zu der Komponente c) so eingestellt, daß das Mol-Verhältnis der urethanisierbaren OH-Gruppen der Komponenten b), d) oder der Summe aus den Komponenten b) und d), sofern die Komponente d) verwendet wird, zu dem vorzugsweise NCO-gruppenhaltigen Homo- oder Copolymerisat in Komponente c) größer als 1, vorzugsweise größer als 10 ist.

Im Anschluß an die Mischung der Komponenten a), b), c) und gegebenenfalls d), erfolgt vorzugsweise eine Mahlung auf die gewünschte Pigmentfeinverteilung in kontinuierlicher oder diskontinuierlicher Weise in üblichen Naßzerkleinerungsaggregaten, wie z.B. Kneter, Attritoren, Walzenstühlen, Dissolver, Rotor-Stator-Mühlen, Kugelmühlen und besonders bevorzugt schnellaufenden Rührwerksperlmühlen mit Umlaufgeschwindigkeiten von 5 bis 60 m/s, vorzugsweise 10 bis 20 m/s, die Mahlkörper in der Größe von 0,1 bis 10 mm, vorzugsweise 0,5 bis 2 mm, aus Stahl, Glas, Keramik, Sand oder Kunststoff enthalten.

Die Zugabe weiterer Zusätze kann erfindungsgemäß vor oder nach der Pigmentzugabe sowie vor oder nach der Mahlung erfolgen.

Die Erfindung betrifft weiterhin ein Verfahren zum Pigmentieren von organischen, makromolekularem Material, insbesondere von Polyurethan-Schaumstoffen, das dadurch gekennzeichnet ist, daß man die erfindungsgemäßen Präparationen für die Einfärbung solcher Materialien, insbesondere von Polyurethan-Schaumstoffen verwendet. Dabei wird die erfindungsgemäße Präparation beispielsweise vor oder während der Polyurethan-Bildung entweder der Polyol-Komponente oder der Polyisocyanat-Komponente oder deren Reaktionsgemischen zugesetzt. Die weitere Reaktion wird in üblicher Weise, d.h. wie für nicht-pigmentierte Polyurethankunststoffe durchgeführt. Angaben dazu sind beispielsweise G. Oertel, Kunststoff-Handbuch, Bd. 7, Polyurethane, Hansa Verlag München, Wien 1983, Engl. Ausgabe 1985 zu entnehmen.

Die Anfärbung der Polyurethan-Schaumstoffe geschieht vorzugsweise kurz vor der Verschäumung in einem Mischkopf, in dem die Polyole und Polyisocyanate, gegebenenfalls in Gegenwart von Hilfsstoffen mit den erfindungsgemäßen Pigmentpräparationen innig vermischt werden.

Die Erfindung betrifft weiterhin ein Verfahren zum Pigmentieren von Polyurethanschaumstoffen, das dadurch gekennzeichnet ist, daß man eine Pigmentpräparation, enthaltend ein Pigment und ein urethanisiertes Homo- oder Copolymerisat, vor oder während der Polyurethanbildung entweder der Polyol- oder Polyisocyanat Komponente oder deren Reaktionsgemischen zusetzt.

Als mögliche Pigmente sind die geeignet, die oben unter der Komponente a) der erfindungsgemäßen Pigmentpräparationen genannt sind. Gleiches gilt auch für das erfindungsgemäß zu verwendende urethanisierte Homo- oder Copolymerisat.

Die erfindungsgemäß zu verwendenden urethanisierten Homo- oder Copolymerisat enthaltenden Pigmentpräparationen können als weitere Zusätze beispielsweise Anpastungsmittel enthalten, wie sie der oben beschriebenen Komponente d) entsprechen oder weitere übliche Zusätze, die ebenfalls oben beschrieben sind.

Die erfindungsgemäß zu verwendende urethanisierten Homo- oder Copolymerisat enthaltende Pigmentpräparation enthalten dieses vorzugsweise in einer Menge von 0,5 bis 20, 1-10, insbesondere 1-5 Gew.-%, bezogen auf die Pigmentpräparation. Auch andere Kunststoffe wie beispielsweise PVC, PS oder PC lassen sich mit den erfindungsgemäßen Pigmentpräparationen pigmentieren.

### Beispiele

### Beispiel 1 (Vergleichsbeispiel gemäß Stand der Technik)

Eine schwarze Pigmentpräparation, enthaltend 18 Gew.-% eines Farbrußes (Komponente a) mit einer B.E.T.-Oberfläche von 45 m²/g und einer DBP-Adsorption von 45 ml/100 g und 82 Gew.-% eines Adipinsäureesters (Komponente d), werden mittels eines Dissolvers homogenisiert und im Anschluß in einer schnellaufenden, diskontinuierlichen Rührwerksperlmühle in einer Zeit von 30 Minuten gemahlen.

Der eingesetzte Adipinsäureester, der ein Umsetzungsprodukt von Adipinsäure mit 1,2-Propylenglykol ist, besitzt eine OH-Zahl von 167 mg KOH/g, eine Säurezahl von 0,5 mg KOH/g und eine Viskosität von 190 bis 200 mPas bei 50 %.

Die so erhaltene Präparation besitzt eine so hohe Viskosität, daß eine technische Herstellung auf kontinuierlich betriebenen Rührwerksperlmühlen nicht möglich ist.

Die Beurteilung der Farbstärke erfolgt sowohl in Polyether- als auch Polyesterurethanschaumstoffen:
1) Polyesterurethan-Schaumstoff
   Eine Mischung aus 200 g eines Polyesters aus Adipinsäure, Diethylenglykol und Trimethylolpropan mit einer OH-Zahl von 50 und 73,2 g eines Gemisches aus 65 % 2,4- und 35 % 2,6-Toluylendiisocyanat wird mit 2 g der Pigmentpräparation versetzt und das Gemisch durch den üblichen Zusatz von Wasser und Hilfsmitteln zur Schaumbildung gebracht. Die visuell ermittelte Farbstärke wird zu 100 % gesetzt und dient dem Vergleich mit den folgenden Beispielen 2 bis 4.
2) Polyetherurethan-Schaumstoff
   Eine Mischung aus 200 g eines Polyethers aus Trimethylolpropan und Ethylenoxid mit einer OH-Zahl von 45 und 80 g eines Gemisches aus 80 % 2,4- und 20 % 2,6-Toluylendiisocyanat wird mit 6 g der Pigmentpräparation versetzt und das Gemisch durch den üblichen Zusatz von Wasser und Hilfsmitteln zur Schaumbildung gebracht.
   Die ermittelte Farbstärke wird zu 100 % gesetzt und dient dem Vergleich mit den folgenden Beispielen 2 bis 4.
   Die Ergebnisse der Farbstärkeprüfung sowie die Viskositätswerte bei 23°C gehen aus der Vergleichstabelle 1 hervor.

### Beispiel 2 (Vergleichsbeispiel)

Nach dem gleichen Verfahren wie im Beispiel 1 beschrieben wird eine schwarze Pigmentpräparation hergestellt, enthaltend 18 Gew.-% des gleichen Farbrußes aus Beispiel 1 (Komponente a) und 82 Gew.-% Diethylenglykolmonobutylether (Komponente b).

Die so erhaltene Präparation ist nicht fließfähig, und für die technische Herstellung auf kontinuierlichen Rührwerksperlmühlen nicht geeignet.

Die Prüfung der Farbstärke in Polyether- und Polyester-Schaumstoff erfolgt analog Beispiel 1, die Ergebnisse sind in Tabelle 1 wiedergegeben.

### Beispiel 3

Nach dem gleichen Verfahren wie in Beispiel 1 beschrieben wird eine schwarze Pigmentpräparation hergestellt, enthaltend 35 Gew.-% des Farbrußes aus Beispiel 1 (Komponente a), 60 Gew.-% Diethylenglykolmonobutylether (Komponente b) und 5 Gew.-% einer 50%igen Lösung eines urethanisierten Copolymers in Propylenglykoldiacetat entsprechend der beschriebenen bevorzugten Zusammensetzung (Komponente c), welche in ihrer Ausgangsform einen Gehalt von 1,5 Gew.-% freien NCO-Gruppen enthält und welche unmittelbar vor dem Eintragen und Homogenisieren des Rußes homogen in den Diethylenglykolmonobutylether eingemischt wird.

Man erhält nach Mahlung eine gut fließfähige, pumpbare und flockungsstabile Rußpräparation mit hoher Farbstärke sowohl in Polyester- wie auch Polyetherschaumstoffen (siehe Tabelle 1).

### Beispiel 4

Nach dem gleichen Verfahren wie in Beispiel 3 beschrieben wird eine schwarze Pigmentpräparation hergestellt, enthaltend 35 Gew.-% des Farbrußes aus Beispiel 1 (Komponente a), 60 Gew.-% Diethylenglykolmonobutylether (Komponente b) und 5 Gew.-% einer 50%igen Lösung eines urethanisierten Copolymers in Propylenglykoldiacetat entsprechend der beschriebenen Zusammensetzung (Komponente c), welche in ihrer Ausgangsform keine freien NCO-Gruppen enthält.

Man erhält nach Mahlung eine thixotrop fließfähige und flockungsstabile Rußpräparation mit hoher Farbstärke (siehe Tabelle 1).

| Vergleichstabelle 1 | | | | |
|---|---|---|---|---|
| Beispiel | Viskosität D = 7 ^{s-1} T = 23°C (mPas) | Fließverhalten | Farbstärke in Polyesterurethan (%) | Farbstärke Polyetherurethan (%) |
| 1 | ∼19.000 | thixotrop fließend | 100 | 100 |
| 2 | ∼2.900 | nicht fließend | 70 | 100 |
| 3 | ∼1.700 | gut fließend | 170 | >200 |
| 4 | ∼4.600 | thixotrop fließend | 190 | 180 |

### Beispiel 5

Eine rote Pigmentpräparation, enthaltend 15 Gew.-% eines Monoazopigmentes (P.R. 48:3), 42,5 Gew.-% des Adipinsäureesters aus Beispiel 1, 42,5 Gew.-% Diethylenglykolmonobutylethers und 2 Gew.-% der 50%igen Lösung des urethanisierten Copolymers aus Beispiel 3 wird mittels eines Dissolvers homogenisiert und wie in Beispiel 3 beschrieben gemahlen.

Im Vergleich zu einer ebenso hergestellten Pigmentpräparation bestehend aus 15 Gew.-% des gleichen Farbpigments und 85 Gew.-% des gleichen Adipinsäureesters ergibt sich eine verbesserte Fließfähigkeit und deutlich geringere Viskosität von 4800 mPas gegenüber 11600 mPas der Vergleichspaste (gemessen bei einem Schergefälle von 7 s⁻¹ und 23°C). Die Farbstärke ist in beiden Fällen gleich, sowohl in Polyether- wie Polyesterurethanschaum.

### Beispiel 6

Eine blaue Pigmentpräparation, enthaltend 15 Gew.-% eines Kupfer-Phthalocyaninpigmentes (PB 15:3), 73 Gew.-% des Adipinsäureesters aus Beispiel 1, 10 Gew.-% Diethylenglykolmonobutylether und 2 Gew.-% der 50%igen Lösung des urethanisierten Copolymers aus Beispiel 3 wird mittels eines Dissolvers homogenisiert und wie in Beispiel 3 beschrieben gemahlen.

Die erhaltene Paste besitzt eine sehr gute Fließfähigkeit und eine niedrige Viskosität von etwa 5000 mPas bei 23°C (D = 7 s⁻¹). Bei der Herstellung von Polyesterurethanschaumstoffen wird eine hohe Farbstärke erreicht.

## Patentansprüche

1. Pigmentpräparationen, enthaltend wenigstens
a) ein Pigment,
b) einen Monohydroxyether und
c) ein urethanisiertes Homo- oder Copolymerisat.

2. Pigmentpräparationen gemäß Anspruch 1, enthaltend
a) 5 bis 80, insbesondere 10 bis 60 Gew.-% Pigment,
b) 5 bis 90, insbesondere 5 bis 80 Gew.-% Monohydroxyether und
c) 0,5 bis 20, insbesondere 1 bis 10 Gew.-% urethanisiertes Homo- oder Copolymerisat.

3. Pigmentpräparationen gemäß Anspruch 1, dadurch gekennzeichnet, daß sie mindestens ein Pigment aus der Gruppe der Azo-, Anthrachinon-, Thioindigo-Reihe, polycyclische Pigmente wie Phthalocyanin-, Naphthalintetracarbonsäure-, Chinacridon-Acrylentetracarbonsäsure oder Isoindolin-Pigmente, Metallkomplex-Pigmente, verlackte Farbstoffe wie Ca-, Mg-, Al-Lacke von Sulfonsäure- und/oder carbonsäurehaltigen Farbstoffe, anorganische Pigmente oder Ruß, insbesondere Ruß enthalten.

4. Pigmentpräparationen gemäß Anspruch 1, dadurch gekennzeichnet, daß als Monohydroxyether ein Monohydroxyalkylether eingesetzt wird, der sich von Homo-, Co- oder Block-Co-Polyetherpolyolen, welche durch Umsetzung von Ethylenoxid und/oder Propylenoxid mit Wasser oder mit niedermolekularen polyfunktionellen Alkoholen, welche mindestens zwei Hydroxylgruppen besitzen, erhalten wurden, ableiten oder die sich von niedermolekularen polyfunktionellen Alkoholen mit wenigstens zwei Hydroxylgruppen ableiten.

5. Pigmentpräparationen gemäß Anspruch 1, dadurch gekennzeichnet, daß der Monohydroxyether ein Mono-C₁-C₄-alkylglykolether, insbesondere Monomethyl-, -ethyl-, -isopropyl-, -n-propyl-, -n-butyl-, -sek.-butyl- oder -tert.-butyl-glykolether ist, insbesondere Mono-n-butylethylenglykolether oder Mono-n-butyldiethylenglykolether ist.

6. Pigmentpräparationen gemäß Anspruch 1, dadurch gekennzeichnet, daß das urethanisierte Homo- oder Copolymerisat ein Umsetzungsprodukt aus einem Hydroxylgruppen-haltigen Homo- oder Copolymerisat vinylhaltiger Comonomeren mit Isocyanat (NCO)-gruppenhaltigen Verbindungen ist.

7. Pigmentpräparationen nach Anspruch 6, dadurch gekennzeichnet, daß die isocyanatgruppenhaltige Verbindung aus der Gruppe Hexamethylendiisocyanat, Isophorondiisocyanat, Toluylendiisocyanat, Diphenylmethandiisocyant oder sein Dimeres, Oligomere von Hexamethylendiisocyanat mit Biuret-, Isocyanurat-, Uretdionstruktur oder Monoisocyanatverbindung wie Butylisocyanat, Phenylisocyanat, Hexylisocyanat, Stearylisocyanat ausgewählt wird, insbesondere Hexamethylendiisocyanat bedeutet und
das hydroxylgruppenhaltige Homo- und Copolymerisat sich von den Comonomeren C₁-C₄-Alkylvinylester, gegebenenfalls C₁-C₄-Alkyl- und/oder Hydroxy- substituiertes Styrol, C₁-C₄-Alkylvinylether und/oder Acrylate oder (Meth)-Acrylate der Formel (I) 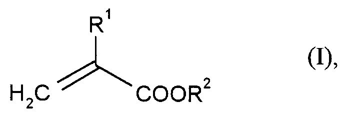 worin
R¹ H oder CH₃ und
R² H oder einen gegebenenfalls C₁-C₁₂-aliphatischen C₅-C₁₂-cycloaliphatischen-, C₆-C₁₀-Aryl-C₁-C₄-alkyl-Rest bedeutet,
ableiten, wobei mindestens ein Comonomer hydroxylgruppenhaltig ist.

8. Pigmentpräparationen nach Anspruch 6, dadurch gekennzeichnet, daß das Copolymerisat aus den Comonomeren Isooctylacrylat und/oder Isooctyl(meth)acrylat, (Meth)acrylsäure, Diethylenglykolmonoacrylat und/oder Diethylenglykolmono(meth)acrylat und/oder Methyl(meth)acrylat aufgebaut ist und als NCO-gruppenhaltige Verbindung Hexamethylendiisocyanat verwendet wird.

9. Pigmentpräparation nach Anspruch 1, dadurch gekennzeichnet, daß sie als weitere Komponente d) ein Polyetherpolyol und/oder Polyesterpolyol enthält.

10. Verfahren zur Herstellung von Pigmentpräparationen gemäß Anspruch 1, dadurch gekennzeichnet, daß man die Komponenten a), b) und c) in einem Naßzerkleinerungsaggregat homogenisiert.

11. Verfahren zum Pigmentieren von organischen makromolekularem Material, dadurch gekennzeichnet, daß man die Pigmentpräparationen gemäß Anspruch 1 vor oder während der Polyurethan-Bildung entweder der Polyol-Komponente oder Polyisocyanat-Komponente oder deren Reaktionsgemisch zusetzt.

12. Kunststoffe, insbesondere Polyurethane, pigmentiert mit der Pigmentpräparation gemäß Anspruch 1.

13. Verfahren zum Pigmentieren von Polyurethan-Schaumstoffen, dadurch gekennzeichnet, daß man eine Pigmentpräparation, enthaltend ein Pigment und ein urethanisiertes Homo- oder Copolymerisat, vor oder während der Polyurethan-Bildung entweder der Polyol- oder der Polyisocyanat-Komponente oder deren Reaktionsgemischen zusetzt.

14. Polyurethan-Schaumstoffe, pigmentiert mit einer ein urethanisiertes Homo- oder Copolymerisat enthaltende Pigmentpräparation.
